# FASCICULE DE BREVET EUROPEEN

(11) **EP 1 769 052 B1**
(45) Date de publication et mention de la délivrance du brevet: **20.05.2015**
(21) Numéro de dépôt: 05750151.2
(22) Date de dépôt: 31.05.2005
(51) Int. Cl.: C10B 53/07, C10G 1/10, C10K 1/16

(54) **INSTALLATION ET PROCÉDÉ POUR LA PRODUCTION DE SUBSTANCES COMBUSTIBLES PAR DÉPOLYMÉRISATION DE PRODUITS EN GOMME**
ANLAGE UND VERFAHREN ZUR HERSTELLUNG VON BRENNBAREN SUBSTANZEN DURCH DEPOLYMERISATION VON GUMMIPRODUKTEN
PLANT AND METHOD FOR PRODUCING COMBUSTIBLE SUBSTANCES BY DEPOLYMERIZATION OF GUM PRODUCTS

(30) Priorité: 09.06.2004 IT FI20040127
(43) Date de publication de la demande: 04.04.2007
(73) Titulaire: Fini, Franco, 58022 Follonica GR (IT); Mencarelli, Renato, 53041 Asciano SI (IT); PROGET ENERGY S.r.l., 18100 Imperia (IM) (IT); IDROEDIL S.r.l., 18018 Arma di Taggia (IM) (IT)
(72) Inventeur: FINI, Franco, I-58022 Follonica (GR) (IT)
(74) Mandataire: Predazzi, Valentina
(86) Numéro de dépôt international: PCT/IT2005/000309
(87) Numéro de publication internationale: WO 2005/121278

(56) Documents cités:
- EP-A- 0 694 600
- US-A- 5 095 040
- US-A- 5 435 890

## Description

La présente invention concerne une installation et un procédé pour la production de substances combustibles par dépolymérisation de produits en gomme.

Le brevet EP 694600 décrit un procédé et une installation pour produire substances combustibles par dépolymérisation de pneus usés où on prévoit, essentiellement, de disposer une préétablie quantité de pneus usés dans un dépolymérisant en dépression, de maintenir une température de dépolymérisation entre 100°C et 135°C, en contrôlant telle température par admission d'air et d'eau dans le dépolymérisant, et d'ajouter une prédéterminée quantité d'oxyde de calcium aux pneus avant d'amorcer le processus de dépolymérisation. On obtient, en accord avec ce qui a été décrit dans le brevet mentionné ci dessus, une substance formée de microparticules d'hydrocarbures à l'état liquide suspendues dans un fluide gazeux. Telle substance est canalisée vers un brûleur où est utilisée immédiatement.

Mais ce procédé connu impose, comme dit ci-dessus, d'utiliser immédiatement la substance combustible ainsi produite, en la transformant entièrement en énergie thermique, n'y étant pas la possibilité d'en stocker même pas une partie. En outre, la substance combustible ainsi obtenue ne résulte pas avantageusement utilisable pour produire énergie électrique.

Le brevet US 5,095,040 décrit un procédé et une installation pour produire substances combustibles par conversion de pneus usés.

Un but de la présente invention est d'éliminer le dit inconvénient en rendant l'élimination des pneus et, plus en général, d'autres matériaux en gomme, particulièrement avantageuse du point de vue économique.

Un autre but de l'invention est de contribuer à une plus efficace et rationnelle élimination de déches encombrants et nuisibles pour l'environnement comme les pneus usés.

A ce résultat on est parvenus, conformément à la présente invention, en adoptant l'idée de réaliser une installation et un procédé dont les caractéristiques sont indiquées dans les revendications indépendantes. Grâce à la présente invention, est possible obtenir une production de substances combustibles liquides et stockables, caractérisée par un rendement élevé. Il est aussi possible utiliser immédiatement les substances gazeuses, opportunément filtrées et aspirées avec l'air dans un moteur Diesel alimenté par le liquide décanté produit par la présente installation où alimenté par gasoil mélangé avec le dit liquide. En outre, les caractéristiques physico-chimiques des substances ainsi produites résultent pleinement compatibles avec une pluralités d'emplois sans nécessité d'autre traitements et dans le plein respect des normes à tutelle de l'environnement, n'étant pas produites substances polluantes en concentration ou quantités considérées nuisibles. Il est aussi possible obtenir autres avantages économiques à travers la récupération et la réutilisation des matériaux métalliques contenus dans les pneus et similaires ainsi traités et qui constituent la partie prépondérant des résidus d'usinage. Il est aussi possible obtenir avantages économiques, outre que de l'environnement, du traitement des matériaux de déchet en gomme différents des pneus.

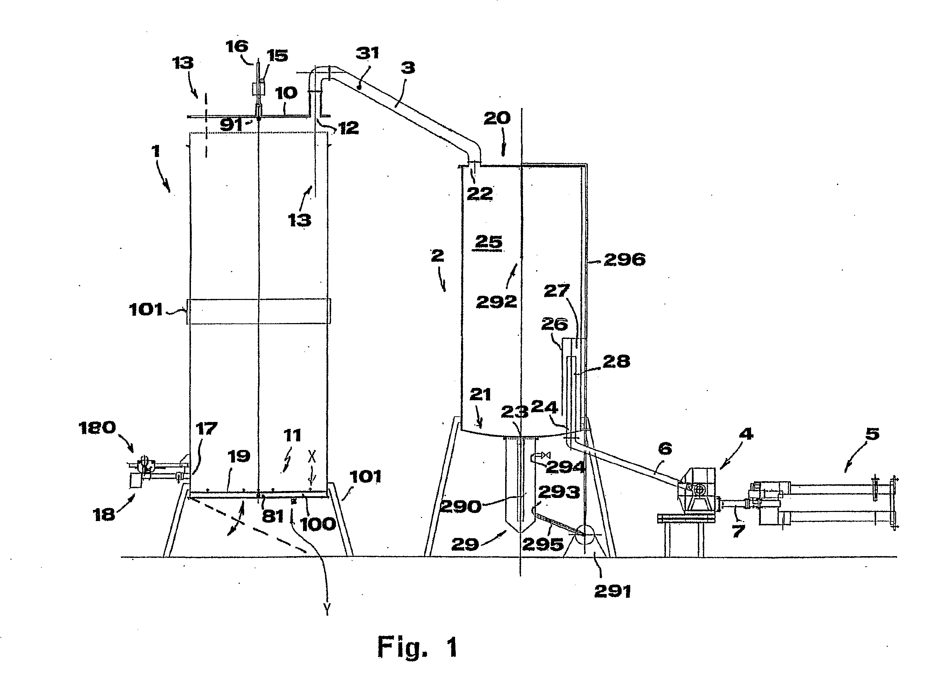

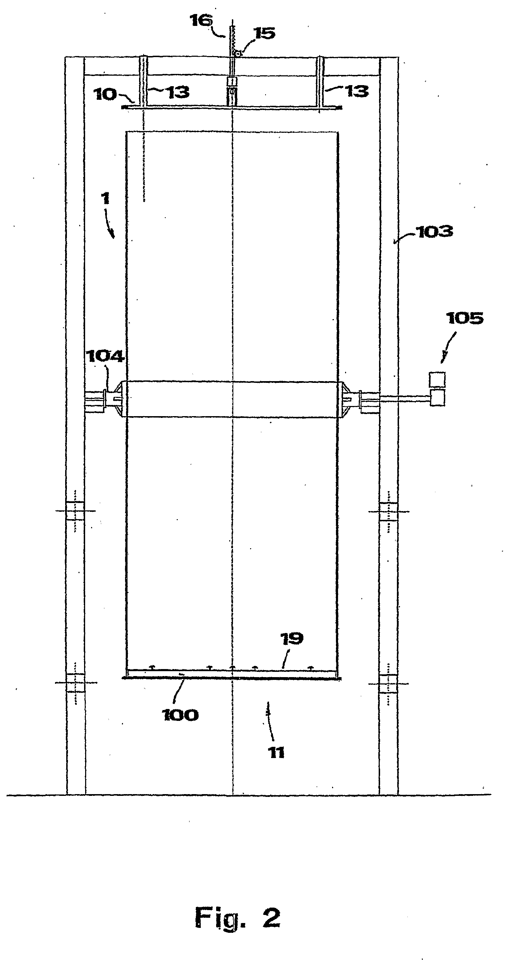

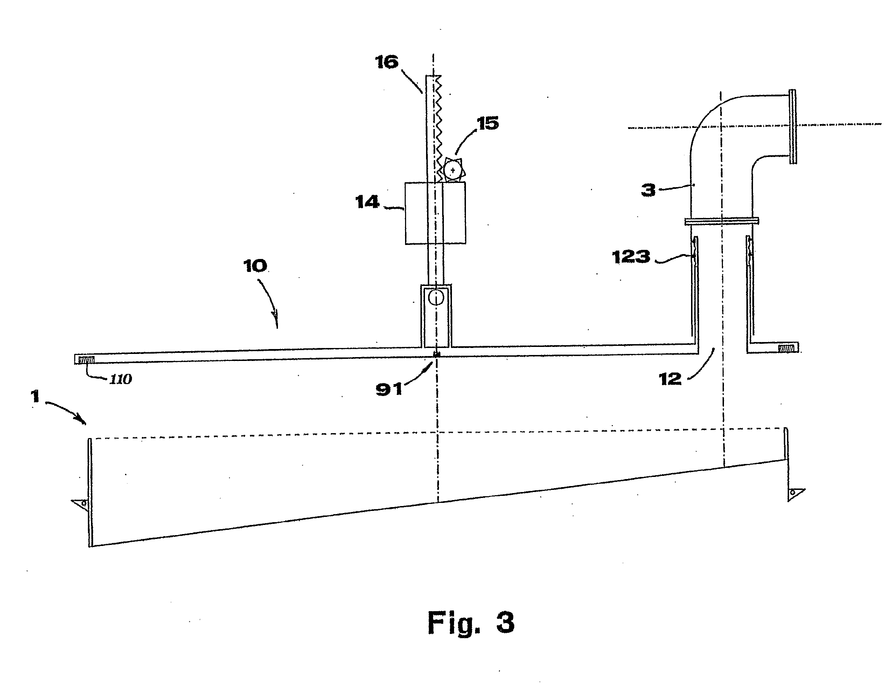

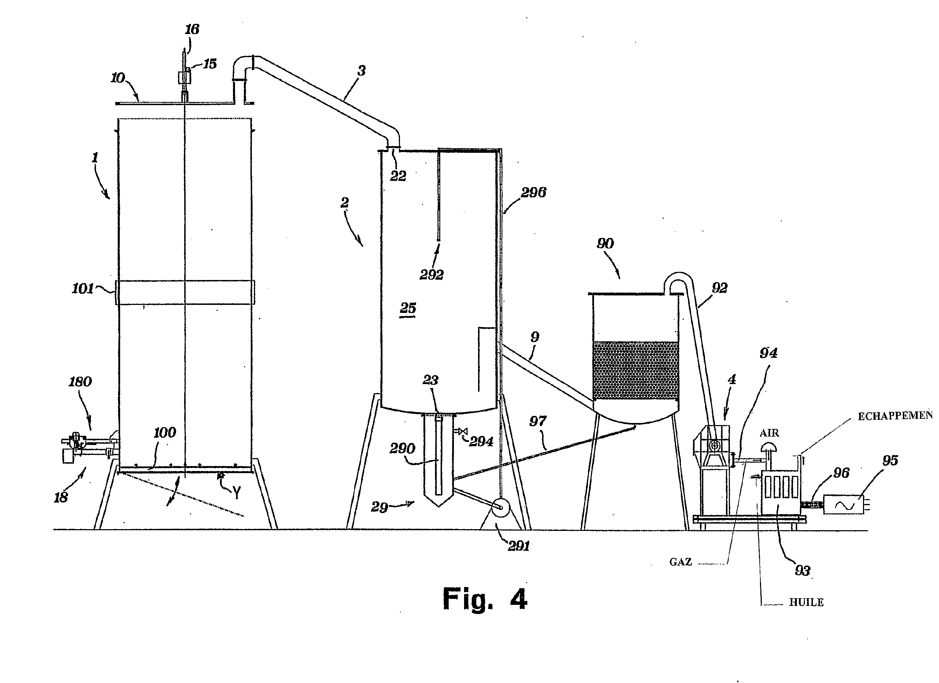

Ces et autres avantages et caractéristiques du présent trouvé seront plus et mieux compris par chaque homme du métier grâce à la description qui suit et à l'aide des dessins annexés, donnés à titre d'exemple pratique du trouvé, mais à ne pas considérer dans le sens limitatif, dans lesquels :
▪ la Fig. 1 représente schématiquement une installation conformément à l'invention, où est prévu l'emploi d'un diviseur de phase et d'une chambre de combustion ;
▪ la Fig. 2 représente un autre exemple de réalisation du dépolymérisant ;
▪ la Fig. 3 représente un détail agrandi de la partie supérieure du dépolymérisant de Fig. 1 et Fig. 2 ;
▪ la Fig. 4 représente un schéma similaire à celui de la Fig. 1, où il est prévu un emploi différent des substances produites.

Réduit à sa structure essentielle et on référence aux Figures 1-3 des dessins annexés, une installation pour la production de substances combustibles conformément à l'invention comprend :
- un dépolymérisant (1), qui est un appareil constitué par un corps fondamentalement cylindrique à section circulaire, avec une base supérieure (10), et une base inférieure (11), où à son intérieure à lieu, avec les modalités décrites par la suite, la dépolymérisation d'une quantité prédéterminée de pneus ou autres produits en gomme introduits dans celui-ci à travers la base supérieure (10), qui est ouvrable, et destinés à former un tas qui appuie sur une grille horizontale (19) placée à un prédéterminée distance de la base inférieure (11), en formant un correspondant interstice (100) à travers le quel, comme ultérieurement décrit par la suite, passe l'air comburant ;
- un diviseur où séparateur de phases (2) disposé en aval du dit dépolymérisant (1), le quel est constitué par un corps fondamentalement cylindrique à section circulaire, avec une base supérieure (20) et une base inférieure (21), et est relié avec le dépolymérisant (1) au moyen d'un tube (3) disposé entre une lumière (12) de la base supérieure (10) du dépolymérisant (1) et un correspondante lumière (22) de la base supérieure (20) du diviseur (2) : le dit diviseur de phases (2) étant destiné à réaliser la séparation d'au moins une partie de la phase liquide des produits sortant du dépolymérisant (1) de la phase gazeuse et présentant une sortie (23) pour la phase liquide ainsi séparée et une sortie (24) pour la restante partie des produits en phase essentiellement gazeuse ;
- une unité d'aspiration (4) pour maintenir en dépression le dépolymérisant (1) et le diviseur de phases (2), la quelle unité (4) est reliée, en amont, avec la sortie (24) pour la phase gazeuse du diviseur (2) et, en aval, avec une chambre de combustion (5) au moyen de deux correspondants tuyaux (6,7), de manière que la phase essentiellement gazeuse des produits sortants du dépolymérisant (1) alimente la chambre de combustion (5).

Avantageusement, la base supérieure (10) du dépolymérisant (1) est montée sur des guidages verticales (13) et est asservie à un moteur électrique (14) au moyen d'une transmission à pignon et crémaillère (15,16) pour en permettre le soulèvement et l'abaissement, c'est-à-dire pour permettre l'introduction du matériel à traiter dans le dépolymérisant (1) et successivement le réenclenchement étanche de ce dernier, assuré par un joint circulaire placé en dessous de la dite base (10) et destiné à coïncider avec le bord circulaire supérieur du dépolymérisant (1).

En proximité de sa base inférieure (11), le dépolymérisant (1) présente une lumière pourvue d'une vanne (17) qui constitue un passage pour un brûleur (18) monté sur un chariot dont la fonction, comme plus et mieux décrit par la suite, est d'amorcer la combustion des produits en gomme introduits dans le dépolymérisant.

Dans le dit interstice (100) est envoyée, quand nécessaire, aussi de l'eau. Sont avantageusement prévus trois capteurs thermiques de contrôle (81,91,31). Le premier de ces-ci (81) est placé dans le dit interstice (100) du dépolymérisant (1) pour relever la température de l'air inférieurement à la dite grille (19). Le deuxième (91) est placé sur la surface inférieure ou interne de la base supérieure (10) du dépolymérisant (1) et il est destiné à relever la température du tas des produits en phase de dépolymérisation. Et le troisième (31) est placé dans le tuyau (3) qui relis le dépolymérisant (1) avec le diviseur de phases (2) pour relever la température du fluide qui y transit.

Le diviseur de phases (2) est formé, comme dit précédemment, par un corps fondamentalement cylindrique avec une base supérieure (20) et une base inférieure (21), en délimitant, de telle façon, une correspondante chambre (25). Sur un côté de la chambre (25) est disposée une paroi (26), de manière à délimiter une deuxième chambre (27) la quelle résulte fermée supérieurement et ouverte inférieurement. La dite deuxième chambre (27) loge un tuyau (28) disposé verticalement avec une extrémité en correspondance de la dite lumière (24) de la base inférieure (21) du corps (2) : l'autre extrémité du dit tuyau (28) étant à une prédéterminé distance de l'ouverture inférieure de la paroi (26). De telle façon, le tuyau (28) résulte relié avec l'unité (4) par le tuyau (6). En dessous de la dite lumière (23) pour la phase liquide présentée par le séparateur (2), est disposé un récipient (29) dans le quel le liquide est vidé à travers un correspondant tuyau (290). Le dit récipient (29) présente une lumière inférieure (293) reliée avec une pompe (291) qui réintroduit dans la chambre (25) le liquide qui en ressort, au moyen d'un ou plusieurs injecteurs ou nébuliseurs (292) disposés à une prédéterminée distance de la base supérieure (20) du corps (2). Le reliement entre la dite lumière (293) du récipient (29) et la dite pompe (291) est réalisé au moyen d'un tube (295) et le reliement entre la pompe (291) et les injecteurs (292) est réalisé au moyen d'un tube (296) dont le trait final est interne à la chambre (25) et passant à travers la base supérieure (20) du corps (2). Le dit récipient (29) présente, en outre, une lumière latérale supérieure (294) pour la vidange du liquide qui n'est pas fait re-cycler par la pompe (291) et qui, dans la pratique, représente la production d'hydrocarbures en phase liquide du moment.

La longueur du dit tuyau (290) est rapportée à la prévalence de l'unité (4) et elle est déterminée de manière à ce que cette dernière ne produise pas aspiration de l'air à travers la lumière supérieure (294) du récipient (29). Par exemple, si la prévalence de l'unité (4) est de 150 mm de colonne d'eau, la distance entre l'extrémité inférieure du tuyau (290) et la lumière de vidange (294) du récipient (29) doit être majeure de 150 mm.

La dite unité (4) pourvoie soit à l'aspiration des produits dans la phase essentiellement gazeuse du tuyau (28) interne au corps (2) et soit à leur compression avant l'introduction dans la chambre de combustion (5). Soit l'unité (4) que la chambre de combustion (5) sont du type connu par les hommes du métier et, par conséquent, ne sont pas décrits plus en détail.

Le fonctionnement de l'installation décrit ci-dessus est le suivant.

Une fois introduits les pneus et autre produits en gomme à traiter et l'oxyde de calcium dans le dépolymérisant (1) et après avoir refermée la base supérieure (10) de ce dernier, le brûleur (18) est disposé, au moyen du respectif chariot (180), à l'intérieur du dépolymérisant. Ici le brûleur (18) est activé pour un temps prédéterminé (par exemple, un temps programmable entre 5 et 10 minutes) de manière à amorcer la combustion de pneus. Passé ce temps ci, le brûleur (18) est désamorcé et sorti du dépolymérisant (1), après quoi la combustion poursuit de façon autonome, alimentée par l'air comburante qui transite à travers la vanne (Y) disposée en dessous de l'interstice (100), à travers l'interstice (100) et à travers les lumières (X) prévues sur la grille horizontale de base (19). Au cours des opérations la vanne (Y) est toujours ouverte. Le procédé thermochimique qui se réalise à l'intérieur du dépolymérisant (1), avec température à régime comprise entre presque 100° C et presque 135° C et pression jusqu'à 10mBar inférieure à celle atmosphérique, consiste en une dépolymérisation de la gomme des produits introduits dans le dépolymérisant, avec formation d'un mélange bi phase comprenant microparticules combustibles dérivantes, précisément, de la dite dépolymérisation. Le fluide qui, grâce à la dépression produite par l'unité (4) en aval, parviens au séparateur de phases (2) subit, dans celui-ci, un traitement physique de séparation d'au moins une partie da la phase liquide de la phase gazeuse. Plus en détail, quand le fluide entre dans le séparateur (2), à travers la lumière (22) de celui-ci, il subit un refroidissement, raison pour laquelle a lieu un phénomène de condensation et le liquide qui ainsi se forme se dirige vers le fond (21) du corps (2) et d'ici, à travers le tuyau (290), parviens au récipient (29) ; entre temps, la phase essentiellement gazeuse est aspirée à travers le tuyau (28) et le tuyau (6) pour être comprimée et envoyée à la chambre de combustion (5). Le liquide prélevé de la pompe (291) et pulvérisé par les injecteurs (292) dans la chambre (25) favorise la dite condensation, puisque les particules de la phase liquide tendent à s'agréger autour aux particules sortantes des injecteurs. Le liquide tiré du récipient (29) est une substance combustible, stockable dans des réservoirs, bidons et tout autre apte récipient ou conteneur où il peut être laissé décanter et dont les caractéristiques physico-chimiques, comme résultant des analyses effectuées sur un échantillon prélevé à la fin d'un cycle, sont indiquées dans le tableau 1 qui suit.

Les gaz en sortie de la chambre de combustion (5) présentent les caractéristiques indiquées dans le tableau 2 qui suit, résultantes d'analyses spécialement réalisées (Méthodes de test : conformes a DM 25.08.2000 - Unichim n° 494 - UNI 10493 - Manuels Unichim n. 122, 158).

Tests réalisés avec une installation expérimentale ont permis de vérifier une production de liquide combustible comprise entre le 35 et le 40% en pois de pneus (à peu prés 350-400 Kg de liquide pour 1000 Kg de pneus introduits et traités dans le dépolymérisant 1). Le liquide combustible ainsi produit est avantageusement utilisable pour alimenter aussi, employés tel quel ou aussi mélangé avec du gasoil, un ordinaire moteur Diesel.

L'oxyde de calcium (introduit dans le dépolymérisant 1 en quantité comprise entre 1'1% et le 3% en pois des produits à traiter) avec la vapeur d'eau qui se développe à la suite de la dépolymérisation et à la vapeur d'eau introduite comme dit plus avant, détermine la formation d'hydroxyde de calcium qui, en se liant au clore et au soufre libérés par le matériel en phase de dépolymérisation, comporte la formation de sels inertes les quels se déposent avec les résidus métalliques sur le fond du dépolymérisant. De cette manière, on évite l'introduction de substances acides dans l'environnement. Les résidus sont constitués fondamentalement par les matériaux métalliques qui constituent les armures ou structures métalliques d'origine interne des produits à dépolymériser et qui présentent une température de fusion assez majeure de celle d'exercice du dépolymérisant (1). Ces résidus, qui contiennent carbone, acier ou autres métaux, peuvent être destinés directement aux fonderies ou, autrement, on peut pourvoir à les sélectionner pour séparer les différents composants métalliques de ces non métalliques, dans les quels est prédominant le carbone, et les utiliser séparément.

Quand la température relevées par le capteur (81) dépasse les 50°C, commence l'introduction d'eau dans le dite interstice (100) à travers une correspondante vanne non visible dans les figures des dessins annexés. La quantité d'eau introduite dans l'interstice (100) grandi avec l'augmentation de la température relevée par le capteur (81).

Quand les températures relevées par les capteurs (91) et (31) sont majeures des 135°C et respectivement de 200°C, on commande une requête inférieure de gaz pour la chambre de combustion (5) ou, en référence à l'installation représenté schématiquement dans la Fig. 4, pour le moteur (93). Quand la production du gaz est inférieure à une valeur prédéterminée, on termine le cycle, en admettant que telle circonstance corresponde au tarissement de la masse à dévulcaniser. Un autre contrôle du processus peut être réalisé au moyen d'une mensuration de la pression dans l'interstice (100) du dépolymérisant (1). Plus en détail, au moyen d'un capteur de pression placé dans le dit interstice on peut contrôler si la pression locale est majeure de celle atmosphérique, alors on rappelle moins air dans le dépolymérisant (1) de manière à réduire la combustion et donc en effet on ralentie le processus thermochimique, jusqu'à ce que la pression dans le dit interstice (100) ne soit encore mineur par rapport à celle atmosphérique, en permettant a nouveau l'entré de l'air à travers la vanne (Y).

En référence au schéma de Fig. 1, le dépolymérisant (1) est un corps fixe soutenu par une structure fixe (1) et la portion de base (19,11) est relié par une charnière autour d'un axe horizontal pour en permettre l'ouverture en guise de trappe (v. ligne en tirets) pour le déchargement des résidus au terme du processus.

En référence au schéma de Fig. 2, le dépolymérisant (1) est un corps soutenus par unes structure fixe (103) à la quelle est relié par une charnière autour à un axe horizontal (104) pour en permettre le renversement à commande d'un correspondant motoréducteur (105) et réaliser le déchargement des résidus à la fin du cycle à travers la base supérieure (10), c'est-à-dire à travers la bouche de chargement laquelle, dans ce cas, est aussi de déchargement.

Dans chaque cas, comme illustré dans le détail de Fig. 3, la lumière (12) de la base supérieure (10) du dépolymérisant (1) se prolonge de façon télescopique à l'intérieure de la correspondante extrémité du tuyau (3) qui relie le dépolymérisant (1) avec le séparateur de phases (2). La tenue peut être réalisée au moyen de plusieurs o-ring (123) disposés entre le dit prolongement et le tuyau (3).

L'amorcement et la coordination des composants de l'installation décrite sont gérables en automatique avec des moyens électroniques programmables. Tels moyens programmables sont du type connu aux hommes du métier de l'automation industrielle et, donc, ne sont pas décrits plus en détail.

Avec référence au schéma de Fig. 4 (non conforme à l'invention), un différent traitement de la phase essentiellement gazeuse en sortie du séparateur (2) est prévu. Plus en détail, la phase essentiellement gazeuse en sortie du séparateur (2) parviens, à travers un correspondant tuyau (9), à un filtre déshuileur (90). A partir de ce dernier, le gaz filtré parviens à la dite unité d'aspiration (4) à travers un correspondant tuyau (92) qui relie la base supérieure du filtre (90) avec la même unité d'aspiration (4). Cette dernière, étant reliée avec l'aspiration d'un moteur Diesel (93) au moyen d'un correspondant conduit (94), envoie le dit gaz filtré dans la même section du moteur (93) à travers la quelle l'air comburante nécessaire au fonctionnement du même est aspirée. Le dit moteur (93) est relié, au moyen d'un arbre de transmission (96), avec un générateur électrique (95) le quel peut être aussi relié au réseau électrique publique. Le dit filtre (90) est en soi déjà connu, étant du type communément employé pour déshuiler les gaz. Par exemple, peut être employé un filtre du type appelé « demister » comprenant un paquet du fils métalliques très minces sur lesquels les particules huileuses se déposent et retombent sous forme de gouttes. Le liquide huileux ainsi séparé du gaz et qui se recueille sur la fond du filtre (90) peut être envoyé au récipient (29) au moyen d'un correspondant conduit (97). Le moteur (93) peut être alimenté avec le liquide produit dans le séparateur de phase (2) et éventuellement fait décanter pour un temps prédéterminé dans le but d'éliminer des éventuelles traces de charbon. Le moteur (93) peut être aussi alimenté avec un mélange constitué par le dit liquide décanté et par le gasoil, outre que, naturellement, avec le seul gasoil. Pour ce qui concerne au processus de dépolymérisation des produits introduits dans le dépolymérisant (1) et à la séparation des phases dans le séparateur (2) il n'y a pas de différences par rapport au cas décrit précédemment avec référence aux Figg. 1-3, étant seulement prévu un différent traitement des substances gazeuses.

Des analyses expressément réalisées sur le gaz en sortie du filtre (90) ont permis d'en vérifier les caractéristiques décrites dans la tableau 3 qui suit.

Le gaz filtré avec l'air du moteur Diesel contribue, selon le régime de fonctionnement de ce dernier, pour un 5 - 20% à l'énergie nécessaire au fonctionnement du moteur, le restant de l'énergie étant fournie par le liquide décanté produit par la même installation et mélangé avec du gasoil. Des test expérimentaux ont été réalisés en utilisant un moteur Diesel aspiré Ford de 80 Hp couplé à un moteur électrique asynchrone triphasé de 30 KVA relié à une charge résistive équilibrée.

Dans la tableau 4 on présente les résultats de quatre tests. Dans chaque test a été relevée la puissance fournie par le moteur alimenté avec l'air et l'huile décanté mélangé avec 1/5 en volume de gasoil. Successivement, sans varier la portée du mélange liquide/gasoil, a été envoyé le gaz filtré sur l'aspiration de l'air du moteur, en mesurant la portée du gaz, et donc la puissance thermique relative au gaz, et les nouvelles valeurs de puissance électrique distribuée.

Dans chacun des tests ainsi réalisés la contribution positive du gaz au rendement de la transformation thermodynamique est résulté égal à presque le 20%.

Dans la tableau 4 les symboles utilisés dans la première colonne ont les suivants :
▪ Pₕᵤᵢₗₑ: puissance absorbée par la charge résistive en alimentant le moteur avec l'huile produite par l'installation et sans ajouter le gaz à l'air aspiré par le moteur (Pₕᵤᵢₗₑ=1.73*Vₕᵤᵢₗₑ*Iₕᵤᵢₗₑ);
▪ P_{huile+gaz}: puissance absorbée par la charge résistive en alimentant le moteur avec l'huile produite et en ajoutant le gaz à l'air aspirée par le moteur (P_{huile+gaz}=1.73*V_{huile+gaz}*I_{huile+gaz}) ;
▪ ΔP=P_{huile+gaz}-Pₕᵤᵢₗₑ
▪ CR : contribution du gaz au rendement de la transformation thermodynamique.
▪ Pour la puissance calorique inférieure du gaz obtenu par la dépolymérisation des seuls pneus on a considéré une valeur de 695 Kcal/Nm³, équivalente à 808 Wh/Nm³.

Le procédé proposé pour la production de substances combustibles conformément à la présente invention comporte, à la lumière de ce qui a été dit précédemment, une phase de dépolymérisation de produits en gomme comme pneus usagés et similaires, avec production d'un mélange fluide à deux phases, et comporte de séparer et recueillir au moins une partie de la phase liquide du dit mélange. Soit la dépolymérisation que la séparation des phases est réalisable dans des milieux dépressurisés. La phase essentiellement gazeuse est utilisable pour alimenter une chambre de combustion, pour être introduite, avec l'air comburante, dans un moteur Diesel ou en chaque autre manière.

**TABLEAU 1**

| **Méthode de test** | **But du test** | **U.m.** | **Résultats** |
|---|---|---|---|
| ASTM D 1298/90 | densité a 15°C | Kg/m3 | 958,5 |
| ASTM D 445/94 | Viscosité à 50°C | mm2/s | 9,654 |
| NOM 47/71 | Viscosité à 50°C conversion | °E | 1,801 |
| ASTM D 445/94 | Viscosité à 100°C | mm2/s | 2,339 |
| NOM 47/71 | Viscosité à 100°C conversion | °E | 1,154 |
| ASTM D 97/93 | Point de glissement | °C | -21 |
| ASTM D 240/92 | Pouvoir calorifique supérieur | MJ/kg | 42,814 |
| | | Kcal/kg | 10228 |
| ASTM D 240/92 | Pouvoir calorifique inférieur | MJ/kg | 40,562 |
| | | Kcal/kg | 9688 |
| ASTMD 5291/92 | Analyse élémentaire C/H/N | % pois | 87,08/10,62/0,34 |
| ASTM D 3180/89 | Oxygène (calculé) | % pois | 0,77 |
| ASTM D 4530/93 | Résidu carboné | % pois | 1,91 |
| IP 143/96 | Asphaltenes | % pois | 1 |
| ASTM D 482/95 | Cendres | % pois | 0,04 |
| ASTM D 95/90 | Eau pour distillation | % volume | 0,1 |
| ASTM D 93/94 | Point de inflammabilité | °C | 72 |
| ASTM D 2622/98 | Soufre | % pois | 1,17 |
| IP 288/95 | Vanadium/Nickel | mg/kg | <1/3 |
| IP 288/95 | Sodium | mg/kg | 2 |
| IP 377/95 | Aluminium | mg/kg | <1 |
| IP 375/95 | Sédiments totaux (H.F.T.) | % pois | 0,02 |
| ASTM D 664/89 | Acidité | mgKOH/g | . 0,126 |
| ASTM D 86/95 | Distillation | | |
| Distillé | Distillé à 250°C | % volume | 19 |
| | Distillé à 350°C | % volume | 74 |
| ASTM D 1500/91 | Couleur | | Noir |
| Olfactif | Odeur | | Intense |

**TABLEAU 2**

| **Paramètre** | **unité** | **valeur moyenne** | **déviation standard** | **valeur limite** |
|---|---|---|---|---|
| Section du conduit d'échantillonnage | m² | 0,119 | | |
| Vitesse des effluents | m/sec | 5,6 | 0,3 | |
| Température des effluents | °C | 308,2 | 2,4 | |
| Pression atmosphérique | mbar% | 992 | | |
| Vapeur d'eau dans les effluents | v/v% | 2,31 | | |
| Densité des effluents | Kg/mc | 0,6 | | |
| Portée mesurée des effluents | mc/h | 2408 | 123 | |
| Portée normalisée sèche des effluents | NmcS/h | 1082 | 60 | |
| Teneur d'oxygène mesuré | v/v% | 12,3 | | |
| Teneur d'oxygène de référence | v/v% | 11 | | |
| Concentration correcte Oxyde de Carbone | mg/mc | 3,4 | 1,1 | 100 |
| Concentration correcte poudres totales | mg/NmcS | 11,3 | 0,3 | 30 |
| Flux de masse poudres totales | gr/h | 10,5 | 0,25 | |
| Concentration correcte S.O.V. totaux (comme C.O.T.) | mg/NmcS | 0,3 | 0,05 | 20 |
| Flux de masse S.O.V. (comme C.O.T.) | gr/h | 0,27 | 0,05 | |
| Concentration correcte oxyde de soufre (comme SO₂) | mg/NmcS | 61 | 6,7 | 200 |
| Flux de masse oxyde de soufre totaux (comme SO₂) | gr/h | 57 | 6,3 | |
| Concentration correcte oxyde d'azote | mg/NmcS | 224 | 6,3 | 400 |
| Flux de masse oxydes d'azote totaux (comme NO₂) | gr/h | 212 | 6 | |
| Concentration correcte acide chlorhydrique total (comme HCl) | mg/NmcS | 11,2 | 2 | 40 |
| Flux de masse acide chlorhydrique total (comme HCl) | gr/h | 10,6 | 1,8 | |
| Concentration correcte fluor total (F-) | mg/NmcS | 3,24 | 0,4 | 4 |
| Flux de masse fluor totale (F-) | gr/h | 3,1 | 0,4 | |

**TABLEAU 3**

| **composant** | **%** | **Kcal/Nm³à 0°C** | **Kcal/Nm³ à 15.5°C** |
|---|---|---|---|
| CO | 13.2 | 400.5 | 378.8 |
| CO₂ | 14.2 | 0 | 0 |
| CH₄ | 2.16 | 185.1 | 175.3 |
| O₂ | 0.63 | 0 | 0 |
| H₂ | 5.77 | 148.9 | 140.9 |
| N₂ | 64.0 | 0 | 0 |
| Autres | 0.04 | 0 | 0 |
| TOTAUX | 100 | 734.5 | 695.0 |

**TABLEAU 4**

| **No. Test** | **I** | **II** | **III** | **IV** |
|---|---|---|---|---|
| Pₕᵤᵢₗₑ (Watt électriques) | 2768 | 3089 | 5716 | 8979 |
| P_{huile+gaz} (Watt électriques) | 4850 | 5631 | 9512 | 12715 |
| ΔP (WATT électriques) | 2082 | 2542 | 3796 | 3736 |
| Portée gaz (Nm³/h) | 12.7 | 15.2 | 23.4 | 23.3 |
| Puissance gaz (Watt thermiques) | 10300 | 12300 | 18900 | 18800 |
| CR (%) | 20.2 | 20.7 | 20.1 | 19.9 |

## Revendications

1. Installation pour la production de substances combustibles au moyen d'une dépolymérisation de produits en gomme, comprenant un dépolymérisant (1) dépressurisé où à l'intérieur a lieu la dépolymérisation d'une quantité prédéterminée de produits introduits à son intérieur,et comprenant un diviseur ou séparateur de phases (2) disposé en aval du dit dépolymérisant (1), le quel est constitué par un corps essentiellement cylindrique, avec une base supérieure (20) et une base inférieure (21), et il est relié avec le dépolymérisant (1) au moyen d'un tuyau (3): le dit séparateur de phases (2) étant destiné à réaliser la séparation d'au moins une partie de la phase liquide des produits qui sortent du dépolymérisant (1) de la phase gazeuse et en présentant une sortie (23) pour la phase liquide ainsi séparée et une sortie (24) pour la restante partie des produits en phase essentiellement gazeuse, où le dit dépolymérisant (1) est dépressurisé au moyen d'une unité d'aspiration (4) disposée en aval du dit séparateur de phase (2) et reliée avec celui-ci au moyen d'un correspondant tuyau (6), **caractérisée en ce que** le dit séparateur de phases (2) comprend une chambre (25) sur un côté de la quelle est disposée une paroi (26), de manière à délimiter une deuxième chambre (27) fermée supérieurement et ouverte inférieurement, ladite deuxième chambre (27) en logeant un tuyau (28) disposé verticalement avec une extrémité en correspondance de ladite lumière (24) de la base inférieure (21) dudit corps (2), l'autre extrémité dudit tuyau (28) étant à une distance prédéterminé de l'ouverture inférieure de la paroi (26), ledit tuyau (28) étant relié avec l'unité (4) par ledit tuyau (6), en dessous de la dite lumière (23) pour la phase liquide présentée par le séparateur (2), étant déposé un récipient (29) dans lequel le liquide est vidé à travers un correspondant tuyau (290), ledit récipient (29) présentant une lumière inférieure (293) reliée avec une pompe (291) qui réintroduit dans la chambre (25) le liquide qui en ressort, au moyen d'un ou plusieurs injecteurs ou nébuliseurs (292) disposés à une prédéterminée distance de la base supérieure (20) du corps (2), le reliement entre ladite lumière (293) du récipient (29) et ladite pompe (291) étant réalisé au moyen d'un tube (295) et le reliement entre la pompe (291) et les injecteurs (292) étant réalisé au moyen d'un tube (296) dont le trait final est interne à la chambre (25) et passant à travers la base supérieure (20) du corps (2), ledit récipient (29) en présentant, en outre, une lumière latérale supérieure (294) pour la vidange du liquide qui n'est pas fait re-cycler par la pompe (291).

2. Installation selon la revendication 1 **caractérisée en ce que** la base supérieure (10) du dépolymérisant (1) est montée sur des guidages verticales (13) et est asservie à un moteur électrique (14) au moyen d'une transmission à pignon et crémaillère (15,16) pour en permettre le soulèvement et l'abaissement, c'est-à-dire pour permettre l'introduction du matériel à traiter dans le dépolymérisant (1) et successivement la fermeture de ce dernier.

3. Installation selon la revendication 1 **caractérisée en ce que** en proximité de sa base inférieure (11), le dépolymérisant (1) présente une lumière (17) qui constitue un passage pour un brûleur avec chariot (18).

4. Installation selon la revendication 1 **caractérisée en ce que** comprend plusieurs capteurs thermiques de contrôle.

5. Installation selon la revendication 1 **caractérisée en ce que** le dépolymérisant (1) présente une base inférieure (11) avec un interstice (100) à travers lequel passe l'air comburant, le dit interstice (100) en étant en dessous d'une grille horizontale (19) placée à une distance prédéterminée de la base inférieure (11), **en ce que** un capteur thermique (81) est placé dans le dit interstice (100) pour relever la température de l'air inférieurement à la dite grille (19), **et en ce que** de l'eau est introduite dans l'interstice (100) lorsque la température relevée par le capteur (81) est supérieure à 50°C.

6. Installation selon la revendication 1 **caractérisée en ce que,** le dépolymérisant (1) présente une base inférieure (11) avec un interstice (100) à travers lequel passe l'air comburant, **en ce que** un capteur de pression est placé dans ledit interstice (100) pour relever la pression dans l'interstice, **et en ce que** au moyen dudit capteur de pression on peut contrôler si la pression locale est majeure de celle atmosphérique, alors on rappelle moins air dans le dépolymérisant (1) de manière à réduire la combustion et donc en effet on ralentie le processus thermochimique, jusqu'à ce que la pression dans ledit interstice (100) ne soit encore mineur par rapport à celle atmosphérique.

7. Installation selon la revendication 1 **caractérisée en ce que** le dit dépolymérisant (1) est un corps soutenus par unes structure fixe (103) à la quelle est relié par une charnière autour à un axe horizontal (104) pour en permettre le renversement à commande d'un correspondant motoréducteur (105) et réaliser le déchargement des résidus à la fin du cycle à travers la base supérieure (10), c'est-à-dire à travers la bouche de chargement laquelle, dans ce cas, est aussi de déchargement.

8. Procédé pour la production de substances combustibles au moyen de la dépolymérisation de produits en gomme, dans l'installation selon une des revendications 1 à 7,
comprenant une phase de dépolymérisation avec production d'un mélange fluide à deux phases, comportant de séparer une phase liquide d'une phase essentiellement gazeuse dudit mélange et recueillir au moins une partie de la phase liquide, **caractérisé en ce que** la dite séparation des phases est réalisée avec un séparateur de phases (2) comprenant une chambre (25) sur un côté de la quelle est disposée une paroi (26), de manière à délimiter une deuxième chambre (27) fermée supérieurement et ouverte inférieurement, la dite deuxième chambre (27) en logeant un tuyau (28) disposé verticalement avec une extrémité en correspondance de la dite lumière (24) de la base inférieure (21) du dit corps (2), l'autre extrémité du dit tuyau (28) étant à une prédéterminé distance de l'ouverture inférieure de la paroi (26), le dit tuyau (28) étant relié avec l'unité (4) par le dit tuyau (6), en dessous de la dite lumière (23) pour la phase liquide présentée par le séparateur (2), étant déposé un récipient (29) dans le quel le liquide est vidé à travers un correspondant tuyau (290), le dit récipient (29) présentant une lumière inférieure (293) reliée avec une pompe (291) qui réintroduit dans la chambre (25) le liquide qui en ressort, au moyen d'un ou plusieurs injecteurs ou nébuliseurs (292) disposés à une prédéterminée distance de la base supérieure (20) du corps (2), le reliement entre la dite lumière (293) du récipient (29) et la dite pompe (291) étant réalisé au moyen d'un tube (295) et le reliement entre la pompe (291) et les injecteurs (292) étant réalisé au moyen d'un tube (296) dont le trait final est interne à la chambre (25) et passant à travers la base supérieure (20) du corps (2), le dit récipient (29) en présentant, en outre, une lumière latérale supérieure (294) pour la vidange du liquide qui n'est pas fait re-cycler par la pompe (291).

## Patentansprüche

1. Anlage für die Herstellung brennbarer Stoffe mittels einer Depolymerisation von Produkten aus Gummi, mit einem drucklosen Depolymerisierer (1), in dessen Inneren die Depolymerisation einer vorbestimmten Menge von Produkten stattfindet, die in sein Inneres eingeführt worden sind, und mit einem Phasenteiler oder -trenner (2), der dem Depolymerisierer (1) nachgelagert ist, welcher aus einem im Wesentlichen zylindrischen Körper mit einer oberen Basis (20) und einer unteren Basis (21) zusammengesetzt ist und der mit dem Depolymerisierer (1) mittels einer Leitung (3) verbunden ist, wobei der Phasentrenner (2) dazu bestimmt ist, die Trennung wenigstens eines Teils der flüssigen Phase der den Depolymerisierer (1) verlassenden Produkte von der Gasphase durchzuführen, und der einen Auslass (23) für die so abgeschiedene flüssige Phase sowie einen Auslass (24) für den verbleibenden Teil der Produkte in der im Wesentlichen gasförmigen Phase aufweist, wobei der Depolymerisierer (1) mittels einer Saugeinheit (4) in einen drucklosen Zustand versetzt wird, wobei die Saugeinheit dem Phasentrenner (2) nachgelagert ist und mit ihm mittels einer entsprechenden Leitung (6) verbunden ist, **dadurch gekennzeichnet, dass** der Phasentrenner (2) eine Kammer (25) aufweist, auf deren einer Seite eine Wand (26) so angeordnet ist, dass sie eine oben geschlossene und unten offene zweite Kammer (27) begrenzt, wobei die zweite Kammer (27) eine vertikal angeordnete Leitung (28) beherbergt, die ein Ende aufweist, welches mit der Öffnung (24) der unteren Basis (21) des Körpers (2) in Verbindung steht, wobei sich das andere Ende der Leitung (28) in einem vorbestimmten Abstand zu der unteren Öffnung der Wand (26) befindet, wobei die Leitung (28) mit der Einheit (4) durch die Leitung (6) verbunden ist, wobei unter der Öffnung (23) für die von dem Trenner (2) hervorgebrachte flüssige Phase ein Behälter (29) angeordnet ist, in welchen die Flüssigkeit über eine entsprechende Leitung (290) entleert wird, wobei der Behälter (29) eine untere Öffnung (293) aufweist, die mit einer Pumpe (291) verbunden ist, welche die aus der Kammer (25) austretende Flüssigkeit in die Kammer (25) zurückführt mittels eines oder mehrerer Einspritzer oder Zerstäuber (292), die in einem vorbestimmten Abstand zu der oberen Basis (20) des Körpers (2) angeordnet sind, wobei die Verbindung zwischen der Öffnung (293) des Behälters (29) und der Pumpe (291) mittels einer Leitung (295) erfolgt und die Verbindung zwischen der Pumpe (291) und den Einspritzern (292) mittels eines Rohrs (296) erfolgt, dessen Ende sich innerhalb der Kammer (25) befindet und sich durch die obere Basis (20) des Körpers (2) erstreckt, wobei der Behälter (29) außerdem eine obere seitliche Öffnung (294) zum Ablassen der nicht von der Pumpe (291) zurückgeführten Flüssigkeit aufweist.

2. Anlage nach Anspruch 1, **dadurch gekennzeichnet, dass** die obere Basis (10) des Depolymerisierers (1) auf vertikalen Führungen (13) gelagert und mittels eines Getriebes mit Zahnrad und Zahnstange (15, 16) einem Elektromotor (14) unterworfen ist, um zu erlauben, sie zu heben und zu senken, das heißt, um das Einführen von zu behandelndem Material in den Depolymerisierer (1) und danach des Schließen des letzteren zu erlauben.

3. Anlage nach Anspruch 1, **dadurch gekennzeichnet, dass** der Depolymerisierer (1) in der Nähe seiner unteren Basis (11) eine Öffnung (17) aufweist, die einen Durchlass für einen Brenner mit Wagen (18) darstellt.

4. Anlage nach Anspruch 1, **dadurch gekennzeichnet, dass** sie mehrere Wärmesensoren zur Steuerung aufweist.

5. Anlage nach Anspruch 1, **dadurch gekennzeichnet, dass** der Depolymerisierer (1) eine untere Basis (11) mit einem Zwischenraum (100) aufweist, durch den die Brennluft hindurchtritt, wobei sich der Zwischenraum (100) unter einem horizontalen Gitter (19) befindet, welches in einem vorbestimmten Abstand von der unteren Basis (11) angeordnet ist, und **dadurch,** dass ein Wärmesensor (81) in dem Zwischenraum (100) angeordnet ist, um die Temperatur der Luft unterhalb des Gitters (19) zu erfassen, und **dadurch,** dass Wasser in den Zwischenraum (100) eingeleitet wird, wenn die von dem Sensor (81) erfasste Temperatur oberhalb von 50 °C liegt.

6. Anlage nach Anspruch 1, **dadurch gekennzeichnet, dass** der Depolymerisierer (1) eine untere Basis (11) mit einem Zwischenraum (100) aufweist, durch den die Brennluft strömt, **dadurch,** dass ein Drucksensor in dem Zwischenraum (100) angeordnet ist, um den Druck in dem Zwischenraum zu erfassen, und **dadurch,** dass man mittels des Drucksensors steuern kann, dass weniger Luft in den Depolymerisierer (1) gelangt, wenn der lokale Druck höher als der atmosphärische Druck ist, so dass die Verbrennung verringert wird und somit im Ergebnis der thermochemische Prozess verlangsamt wird, bis der Druck in dem Zwischenraum (100) niedriger als der atmosphärische Druck wird.

7. Anlage nach Anspruch 1, **dadurch gekennzeichnet, dass** der Depolymerisierer (1) ein Körper ist, der von einer festen Struktur (103) getragen wird, mit welcher der Körper über ein Scharnier um eine horizontale Achse (104) verbunden ist, um ihm zu erlauben, per Befehl einen entsprechenden Getriebemotor (105) umzuschalten und das Ablassen der Reststoffe am Ende des Zyklus durch die obere Basis (10) durchzuführen, das heißt durch die Ladeöffnung, welche in diesem Fall auch die Entladeöffnung ist.

8. Verfahren zur Herstellung brennbarer Stoffe mittels Depolymerisation von Produkten aus Gummi in einer Anlage nach einem der Ansprüche 1 bis 7, umfassend eine Depolymerisationsphase mit Erzeugung einer flüssigen Zweiphasenmischung, wobei eine flüssige Phase von einer im Wesentlichen gasförmigen Phase der Mischung getrennt wird und wenigstens ein Teil der flüssigen Phase aufgefangen wird, **dadurch gekennzeichnet, dass** die Trennung der Phasen mit einem Phasentrenner (2) erfolgt, welcher eine Kammer (25) aufweist, auf deren einer Seite eine Wand (26) angeordnet ist, so dass eine oben geschlossene und unten offene zweite Kammer (27) begrenzt wird, wobei die zweite Kammer (27) eine vertikal angeordnete Leitung (28) beherbergt, deren eines Ende mit der Öffnung (24) der unteren Basis (21) des Körpers (2) in Verbindung steht, wobei das andere Ende der Leitung (28) sich in einem vorbestimmten Abstand zu der unteren Öffnung der Wand (26) befindet, wobei die Leitung (28) mit der Einheit (4) über die Leitung (6) verbunden ist, wobei unterhalb der Öffnung (23) für die von dem Trenner (2) hervorgebrachte flüssige Phase ein Behälter (29) angeordnet ist, in den die Flüssigkeit durch eine entsprechende Leitung (290) entleert wird, wobei der Behälter eine untere Öffnung (293) aufweist, die mit einer Pumpe (291) verbunden ist, welche die aus der Kammer (25) austretende Flüssigkeit in die Kammer (25) zurückführt mittels eines oder mehrerer Einspritzer oder Zerstäuber (292), die in einem vorbestimmten Abstand zu der oberen Basis (20) des Körpers (2) angeordnet sind, wobei die Verbindung zwischen der Öffnung (293) des Behälters (29) und der Pumpe (291) mittels eines Rohrs (295) erfolgt und wobei die Verbindung zwischen der Pumpe (291) und den Einspritzern (292) mittels eines Rohrs (296) erfolgt, dessen Ende sich innerhalb der Kammer (25) befindet und welches sich durch die obere Basis (20) des Körpers (2) erstreckt, wobei der Behälter (29) außerdem eine obere seitliche Öffnung (294) aufweist für das Entleeren der Flüssigkeit, die nicht von der Pumpe (291) im Kreislauf bewegt wird.

## Claims

1. An installation for the production of combustible substances by means of depolymerization of rubber products, comprising a depressurized depolymerizing device (1), wherein depolymerization of a predetermined quantity of products takes place inside it, and including a phases divisor or separator (2) disposed downstream of said depolymerizing device (1), which is constituted by an essentially cylindrical body with an upper base (20) and a lower base (21), and it is connected with the depolymerizing device (1) by means of a pipe (3): said phase separator (2) being designed to achieve the separation of at least one portion of the liquid phase of the products leaving the depolymerizing device (1) of the gaseous phase and presenting an outlet (23) for the thus separated liquid phase and an outlet (24) for the remaining portion of the products in essentially gaseous phase, wherein the said depolymerizing device (1) is depressurized by means of an aspiration unit (4) disposed downstream of said phase separator (2) and connected therewith with this by means of a corresponding pipe (6), **characterized in that** the said phase separator (2) comprises a chamber (25) on one side whereof is positioned a wall (26), so as to delimit a second chamber (27) closed on top and open at the bottom, said second chamber (27) housing a pipe (28) positioned vertically with one end in correspondence with said opening (24) of the lower base (21) of said body (2), the other end of said pipe (28) being at a predetermined distance from the lower opening of the wall (26), said pipe (28) being connected with the unit (4) by said pipe (6), below said opening (23) for the liquid phase presented by the separator (2), a container (29) being positioned, wherein the liquid is emptied through a corresponding pipe (290), said container (29) having a lower opening (293) connected with a pump (291) which reintroduces into the chamber (25) the liquid leaving it, by means of one or several injectors or nebulizers (292), positioned at a predetermined distance from the upper base (20) of the body (2), the connection between said opening (293) of the container (29) and said pump (291) being accomplished by means of a tube (295) and the connection between the pump (291) and the injectors (292) being accomplished by means of a tube (296) of which the final run is inside the chamber (25) and passing through the upper base (20) of the body (2), said container (29) further having an upper lateral opening (294) for draining the liquid which is not recycled by the pump (291).

2. The installation according to claim 1, **characterized in that** the upper base (10) of the depolymerizing device (1) is mounted on vertical guides (13) and is slaved to an electric motor (14) by means of a rack-and-pinion transmission (15, 16) to allow its lifting and lowering, that is to allow the introduction of the material to be treated in the depolymerizing device (1) and afterward the closing of the latter.

3. The installation according to claim 1, **characterized in that** in proximity to its lower base (11), the depolymerizing device (1) has an opening (17) which constitutes a passage for a burner with a carriage (18).

4. The installation according to claim 1 **characterized in that** it includes several control thermal sensors.

5. The installation concerning claim 1 **characterized in that** the depolymerizing device (1) has a lower base (11) with an interstice (100) through which passes the combustion air, said interstice (100) being below a horizontal grille (19) placed at a predetermined distance from the lower base (11), **in that** a thermal sensor (81) is placed in said interstice (100) to record the temperature of the air below said grille (19), **and in that** water is introduced in the interstice (100) when the temperature recorded by the sensor (81) is greater than 50°.

6. The installation according to claim 1 **characterized in that** the depolymerizing device (1) has a lower base (11) with an interstice (100) through which passes the combustion air, **in that** a pressure sensor is placed in said interstice (100) to determine the pressure in the interstice, **and in that** by means of said sensor it is possible to determine whether the local pressure is greater than the atmospheric pressure, whereupon less air is brought into the depolymerizing device (1) so as to reduce the combustion and thus in effect slow down the thermochemical process, until the pressure in said interstice (100) is no longer greater than the atmospheric pressure.

7. The installation according to claim 1, **characterized in that** said depolymerizing device (1) is a body sustained by a fixed structure (103) to which is connected by a hinge about a horizontal axis (104) to allow its reversal on command by a corresponding gear motor (105) and to realize the discharging of the residues at the end of the cycle through the upper base (10), that is through the loading hatch which, in this case is also for discharging.

8. A method for production of combustible substances by means of a depolymerization of rubber products, in the installation according to one of claims 1 to 7, including a depolymerization phase with production of a fluid mixture in two phases, implying the separation of a liquid phase from an essentially gaseous phase of said mixture and recovering at least a portion of the liquid phase, **characterized in that** the said separation of the phases is carried out with a phase separator (2) comprising a chamber (25) on one side whereof is positioned a wall (26), so as to delimit a second chamber (27) closed on top and open at the bottom, said second chamber (27) housing a pipe (28) positioned vertically with one end in correspondence with said opening (24) of the lower base (21) of said body (2), the other end of said pipe (28) being at a predetermined distance from the lower opening of the wall (26), said pipe (28) being connected with the unit (4) by said pipe (6), below said opening (23) for the liquid phase presented by the separator (2), a container (29) being positioned, wherein the liquid is emptied through a corresponding pipe (290), said container (29) having a lower opening (293) connected with a pump (291) which reintroduces into the chamber (25) the liquid leaving it, by means of one or several injectors or nebulizers (292), positioned at one predetermined distance from the upper base (20) of the body (2), the connection between said opening (293) of the container (29) and said pump (291) being accomplished by means of a tube (295) and the connection between the pump (291) and the injectors (292) being accomplished by means of a tube (296) of which the final run is inside the chamber (25) and passing through the upper base (20) of the body (2), said container (29) further having an upper lateral opening (294) for draining the liquid which is not recycled by the pump (291).
